# EUROPÄISCHE PATENTSCHRIFT

(11) **EP 2 454 353 B1**
(45) Veröffentlichungstag und Bekanntmachung des Hinweises auf die Patenterteilung: **17.03.2021**
(21) Anmeldenummer: 10732898.1
(22) Anmeldetag: 02.07.2010
(51) Int. Cl.: C10M 173/02

(54) **VERWENDUNG EINES KÜHL- UND TRENNMITTELS ODER EINES KÜHL- UND SCHMIERMITTELS**
USE OF A COOLING AND RELEASE FLUID OR A COOLING AND LUBRICATING FLUID
UTILISATION D'UN LIQUIDE DE REFROIDISSEMENT ET DE SÉPARATION OU D'UN LIQUIDE DE REFROIDISSEMENT ET DE LUBRIFICATION

(30) Priorität: 13.07.2009 DE 102009033158
(43) Veröffentlichungstag der Anmeldung: 23.05.2012
(73) Patentinhaber: Gelita AG, 69412 Eberbach (DE)
(72) Erfinder: LAUDENKLOS, Manfred, 61137 Schöneck (DE); REIHMANN, Matthias, 69502 Hemsbach (DE)
(74) Vertreter: Hoeger, Stellrecht & Partner Patentanwälte mbB
(86) Internationale Anmeldenummer: PCT/EP2010/059459
(87) Internationale Veröffentlichungsnummer: WO 2011/006777

(56) Entgegenhaltungen:
- WO-A2-2007/028615
- CN-A- 1 511 910
- CN-A- 1 749 275
- DE-A1- 19 637 168
- GB-A- 2 023 644
- GB-A- 2 166 107
- JP-A- 2003 319 794
- US-A- 3 823 023
- US-A- 3 860 434
- US-A- 4 765 917
- US-A- 5 320 157
- US-A- 6 136 341
- Wolfgang Arneth: "Gelatine", Römpp Online, 1 August 2006 (2006-08-01), pages 1-2, XP055354667, Retrieved from the Internet: URL:https://roempp.thieme.de/roempp4.0/do/ data/RD-07-00483 [retrieved on 2017-03-14]
- Jenny Hartmann-Schreier: "Proteine", RÖMPP - Online, 1 November 2005 (2005-11-01), pages 1-13, XP055354669, Retrieved from the Internet: URL:https://roempp.thieme.de/roempp4.0/do/ data/RD-16-04546 [retrieved on 2017-03-14]
- Wolfgang Maison ET AL: "4-Hydroxyprolin", RÖMPP - Online, 1 December 2007 (2007-12-01), pages 1-2, XP055354687, Retrieved from the Internet: URL:https://roempp.thieme.de/roempp4.0/do/ data/RD-08-02500 [retrieved on 2017-03-14]

## Beschreibung

Die Erfindung betrifft die Verwendung eines Kühl- und Trennmittels für wiederverwendbare Gussformen, oder eines Kühl- und Schmiermittels, für die spanabhebende Bearbeitung , hergestellt aus einem Konzentrat mit einer in Wasser gelösten Wirksubstanz.

Während bei der Verwendung als Kühl- und Trennmittel von wiederverwendbaren Gussformen insbesondere Stahlgussformen für den Druckguss oder Umformwerkzeuge für die Warmumformung von Interesse sind, bezieht sich die Verwendung als Kühl- und Schmiermittel auf die spanabhebende Bearbeitung, insbesondere Bohren. Fräsen, Schleifen, Schneiden, Drehen, Sägen oder Gewindeschneiden von Eisengusslegierungen, Stahllegierungen, Nickelbasislegierungen, Kobaltbasislegierungen, Buntmetallen und Kunststoffen sowie die Kaltumformung.

Derartige Kühl- und Trennmittel oder Kühl- und Schmiermittel sind aus dem Stand der Technik bekannt. Sie dienen zum Abkühlen verwendeter Gussformen und spanend bearbeiteter Bauteile. Bei der Verwendung als Trennmittel wird gleichzeitig eine Schicht, die die Entformbarkeit des gegossenen Produktes aus der Form verbessern soll, aufgebracht, während bei der Verwendung als Schmiermittel eine zusätzliche Schmierung der Bauteile und Werkzeuge erfolgt, die die Haltbarkeit derer erhöht.

So werden beispielsweise beim Gießen von Werkstücken auf Basis von Aluminium, Magnesium und Zink bzw. Legierungen dieser Metalle im Druckguss- oder Squeeze-cast-Verfahren in Wasser emulgierte Polymere, zumeist Wachse, Silikone oder modifizierte Polysiloxane als KühlTrennmittel verwendet. Vor dem Einsatz am Druckgusswerkzeug werden die als Konzentrat angelieferten Emulsionen auf die zur ausreichenden Wirkung notwendige Arbeitskonzentration verdünnt. Dabei werden normalerweise Verdünnungen benutzt, die 0,12 Gew.% bis 2,5 Gew.% Trockensubstanz im Kühl- und Trennmittel enthalten.

Die Gussform wird beispielsweise unter Druck mit einer 560-740 °C warmen Legierungsschmelze beaufschlagt. Nach dem Erstarren der Schmelze wird das Gussteil der etwa 450 - 580 °C warmen Gussform entnommen und mittels Aufsprühen eines Kühl-und Trennmittels auf etwa 120-350 °C heruntergekühlt, falls notwendig gereinigt und erneut mit einer Schmelze beaufschlagt. Das im Kühl- und Trennmittel enthaltene Wasser dient der Kühlung der Form sowie der Reinigung der Form von gegebenenfalls vorhandenen Rückständen, welche nach dem Entformen durch den Einsatz des Kühl- und Trennmittels auf der Form verbleiben. Das Trennmittel wirkt, indem die Polymere selbst durch pyrolytischen Verfall beim Füllen der Form mit dem zu gießenden Metall und anschließender Verdichtung in Abhängigkeit der Temperaturverhältnisse eine Trennschicht aufbauen.

Der Einsatz der bekannten Kühl- und Trennmittel führt zu zufriedenstellenden Ergebnissen, weist jedoch einige Nachteile auf.

So setzt sich häufig das Kühl- und Trennmittel in Bereichen der Form, beispielsweise am Formrahmen und Formteilungen welche nicht mit dem zu gießenden Metall beaufschlagt werden und an Konturen, die wenig temperaturbeaufschlagt werden, ab, da die Temperatur an diesen Stellen nicht ausreicht, das Kühl- Trennmittel pyrolytisch abzubauen. Stattdessen trocknet das Kühl- und Trennmittel aufgrund der dennoch vorhandenen Wärme aus und kann nicht mehr vollständig in Wasser emulgiert werden. Bei wiederholten Sprühvorgängen führt dies zum Aufbau einer Schicht, die Maßgenauigkeitsprobleme am Gussstück und Dichtheitsprobleme an der Form zu Folge hat, so dass die Gussqualität sinkt. Auch im Bereich der Kavität kann es durch ungenügenden pyrolytischen Abbau des Trennmittels zu Aufbauten kommen, die die Gussqualität verschlechtern. Ferner können speziell in Turbulenzzonen Rückstände in die Gussteiloberfläche eingelagert werden.

Des Weiteren sind Stabilität und Entsorgung dieser Emulsionen mit Problemen behaftet. Häufig entsteht durch längere Standzeiten nach dem Emulgieren eine ungleichmäßige Verteilung der Wirksubstanz in der Emulsion, wodurch die Benetzung der Oberflächen mit diesen Kühl- und Trennmitteln ungleichmäßig ist.

Des Weiteren müssen die abgewaschenen Reste der bekannten Kühl- und Trennmittel einer gesonderten Abwasserbehandlung zugeführt werden, da sie nicht einfach biologisch abbaubar sind. Außerdem können ihre gasförmigen Rückstände beim pyrolytischen Zerfall während der Anwendung Mensch und Umwelt gefährden.

Am Gussstück verbleiben häufig wachs- oder siliziumhaltige Rückstände auf der Oberfläche, welche schlecht zu entfernen sind, so dass ein erhöhter Reinigungsaufwand erforderlich ist. Um diese wasserabweisenden Rückstände zu entfernen, müssen daher starke Säuren, Laugen oder andere Lösungsmittel verwendet werden.

Bei bekannten Kühl-Schmiermitteln für die spanabhebende Bearbeitung entstehen durch den Druck bei der Spanabfuhr mitunter Aufbauschneiden am Schneidwerkzeug und oft bläuliche Verfärbungen im bearbeiteten Bereich des Werkstücks. Die Aufbauschneiden verringern die Lebensdauer des Schneidwerkzeugs. Durch Anschweißen der Aufbauschneiden kann auch die Werkstückqualität verschlechtert werden, wenn sich beispielweise Teile der Aufbauschneide lösen und in die Werkstückoberfläche gedrückt werden. Außerdem enthalten Kühl-Schmiermittel bisweilen Beizzusätze, die Legierungselemente der Werkstücklegierung beschädigen können. Die bei der spanabhebenden Bearbeitung anfallenden Späne müssen oftmals durch mehrstufige aufwendige Verfahren, beispielsweise durch Filtration und Waschen von anhaftenden Kühlschmiermitteln befreit werden, damit das Kühl- Schmiermittel im Zyklus gefahren werden kann. Die Späne selbst müssen oft als Sondermüll entsorgt werden, da ihre Aufbereitung sich aufgrund des anhaftenden Kühlschmiermittels nicht lohnt.

Die US 4,765,917 A offenbart ein Schmiermittel auf Wasserbasis für Schmiedeprozesse also für umformende spanfreie Bearbeitung. Dieses Schmiermittel besteht aus einem Trimellitsäuresalz mit einem Alkalimetall, einem Verdickungsmittel, einem Druckadditiv, einem Biozid-Mittel sowie einem Natriumnitirid oder Ammoniumphosphat als wirkungssteigerndes Mittel. Als Verdickungsmittel werden Zellulose enthaltende Materialen Gelatine oder Caseine eingesetzt. Diese dienen jedoch ausschließlich zur Verdickung des Mittels.

Die WO 2007/028615 A1 offenbart eine Trennschicht für das Gießen von Nichteisenmetallen, bei der Gelatine verwendet wird. Die Gelatine weist einen Gewichtsanteil von 0,5 bis 5 Gew.% auf. Als Wirksubstanz dient ein Eisenphosphat mit eingebundenen Struktur- und Primärteilen.

Die US 3,823,023 A offenbart ein Mittel zur Oberflächenbehandlung einer Form zum Gießen eines polymerisierenden Materials, wie einem Acrylpolymer oder Polyester.

Die US 3,860,434 offenbart ein Mittel zur Vorbereitung eines Stahlgegenstandes zur Kaltverformung. Wirksubstanz ist hier ein Oxalat. Der Anteil des Proteins beträgt mindestens 0,1 Gew.%.

Die Dokumente US 6 136 341 A, CN 1 511 910 A, JP 2003 319794 A, GB 2 166 107 A und CN 1 749 275 A offenbaren jeweils wässrige Lösungen enthaltend zwischen 10% und 50% Gewichtsanteilen Gelatinehydrolysat bzw. Collagenhydrolysat mit einem Molekulargewicht zwischen 1.000 und 7.000 Dalton .

Es stellt sich daher die Aufgabe, ein Konzentrat für ein Kühl- und Trennmittel sowie für ein Kühl- und Schmiermittel beziehungsweise ein Kühl- und Trennmittel und ein Kühl- und Schmiermittel bereitzustellen, mit welchem die oben genannten Probleme vermieden werden. Insbesondere soll dieses Konzentrat biologisch abbaubar sein, die Zykluszeiten im Gießprozess und im Umformprozess verringert werden und bei der Verwendung als Kühl- und Trennmittel Rückstände auf der Form und auf dem Gussstück möglichst vermieden werden. Bei der Verwendung als Kühl- und Schmiermittel soll die für die spanabhebende Umformung benötigte Kraft verringert werden und die Kühlwirkung gesteigert werden. Die Tendenz zur Bildung von Aufbauschneiden soll deutlich verringert werden und die Legierungselemente der Werkstücklegierung sollen nicht durch eventuelle Beizzusätze beschädigt werden. Des Weiteren ist es wünschenswert, den Anteil an Trockensubstanz im Kühl- und Trennmittel beziehungsweise im Kühl- und Schmiermittel zur Kostensenkung zu verringern. Insbesondere sollen die Kosten auch dadurch gesenkt werden können, dass die bei der spanabhebenden Bearbeitung anfallenden Späne durch einfaches Einschmelzen wiederverwendet werden können, indem das Kühlschmiermittel beim Einschmelzen der Späne unter Freisetzung einer sauerstoffreduzierenden Atmosphäre pyrolytisch abgebaut werden kann.

Diese Aufgabe wird dadurch gelöst, dass das Konzentrat eine Gelatine mit einem Gewichtsanteil von 10% bis 50% beinhaltet, wobei die verwendete **Gelatine** ein Molekulargewicht von 1.000 bis **7.000** Dalton und einen Stickstoffgehalt von 16 -19% aufweist. **Bei einem** Kühl- und Trennmittel **ist** dieses Konzentrat in Wasser in einem Verhältnis von 1:100 bis 1:1200, bevorzugt in einem Verhältnis von 1:500 bis 1:1000 verdünnt , und **bei einem** Kühl- und Schmiermittel **ist** dieses Konzentrat in Wasser in einem Verhältnis von 1:20 bis 1:500 verdünnt Überraschenderweise wurde herausgefunden, dass ein derartiges kühl- und Trennmittel mit Gelatine, beim Aufsprühen eine gleichmäßige Benetzung der Oberfläche der Gussform sicherstellt und während des Sprühvorgangs einen gut haftenden einheitlichen Trennfilm aufbaut. Bei den wiederholten Sprühvorgängen nach dem jeweiligen Gießprozess entsteht ein Gleichgewichtzustand zwischen dem neu aufgetragenen Mittel sowie dem Ablösen überschüssigen Trennmittels. Das Zersetzungsverhalten ist im Vergleich zu bekannten Trennmitteln besser, wodurch die Bildung von Belägen durch eintrocknendes überschüssiges Trennmittel sowohl im Bereich der Kavität als auch im Bereich des Formrahmens signifikant reduziert wird. Der Trennfilm wird beim Gießvorgang unter den dort herrschenden Temperaturbedingungen durch pyrolytischen Zerfall in einer Weise abgebaut, dass während des Druckgussvorgangs eine kohlenstoffreiche Schicht, welche für die Trennwirkung verantwortlich ist, erzeugt wird. Eine Diffusion des Aluminiums zur Gussform wird gleichzeitig verhindert. Der pyrolytische Zerfall führt außerdem zur Ausbildung einer reduzierenden Atmosphäre, was sich wegen der Verringerung der Oxidbildung positiv auf die Qualität der Gussteile auswirkt. Rückstände dieses Trennmittels lassen sich vor und nach dem Guss leichter abwaschen, als bei konventionellen Trennmitteln auf Wachs- oder Siloxanbasis. Dadurch wird verhindert, dass es während einer Serie von Gießprozessen zum stetigen Aufbau von Trennmittelrückständen in den kühleren Formbereichen kommt, was zu einer besseren Maßhaltigkeit beim Gießprozess führt und eine zuverlässige Öffnungs- und Schließfunktion des Werkzeugs sicherstellt. Das hergestellte Gussstück lässt sich nach dem Waschen mit Wasser und anschließendes Trocknen ohne weitere Oberflächenbehandlung lackieren, so dass zeitraubende Reinigungsschritte vermieden werden. Die Zykluszeit wird durch eine deutlich verbesserte Kühlwirkung verkürzt. Das Mittel eignet sich für die üblichen Applikationsmethoden wie Druckzerstäubung oder pneumatische Zerstäubung mit Innen- oder Außenmischdüsen. Durch den erhöhten Wasseranteil im Kühl- und Trennmittel werden die Oberflächen der Werkzeuge besser benetzt und effektiver gekühlt. Insbesondere wird das sogenannte Leidenfrost'sche Phänomen durch die wasserbindenden Eigenschaften des Proteins im Gegensatz zu bekannten Mitteln auf Silikonöl- oder Wachsbasis reduziert, was sich an einer deutlich spürbaren Verringerung der aufsteigenden Dampfmengen beim Kühlvorgang zeigt.

Für ein derartiges Kühl- und Schmiermittel wurde festgestellt, dass es sich um ein scher- und druckstabiles System handelt, und dass eine gleichmäßige und lange Spanbildung beim Spanabheben entsteht. Die Neigung zur Spanbrechung wurde deutlich reduziert. Geringfügige Verkantungen des Werkzeugs an kleinen Graten des bearbeiteten Bauteils werden weitestgehend vermeiden, so dass die benötigte Schnittkraft und die Wärmebildung sinkt und die Gefahr der Bildung von Aufbauschneiden reduziert wird. Gleichzeitig wird die Kühlwirkung verbessert und durch die vorhandene Schmierung der Oberflächen der benötigte Kraftaufwand verringert. Die bei der Bearbeitung anfallenden Späne sind frei von störenden Anhaftungen und können durch einfaches Einschmelzen dem Rohstoffkreislauf zugeführt werden. Das Kühlschmiermittel wirkt außerdem als Korrosionsschutz.

In einer vorteilhaften Ausführung enthält das Konzentrat ein Hydrokolloid mit einem Gewichtsanteil von 0,1 bis 10%. Vorzugsweise wird das Hydrokolloid aus einem oder mehreren der Stoffe AgarAgar, Johannisbrotkornmehl, Pektin, GummiArabicum oder Stärke oder Maismehl ausgewählt, Diese dienen als Trennzusätze zur zusätzlichen Verbesserung der Schmierwirkung, Trennwirkung, Filmbildung und des Benetzungsverhaltens. Ebenso können Polymere wie Polyethylenglykol oder Polyvinylalkohol zu diesem Zweck mit einem Gewichtsanteil von 0,1 bis 10%. beigemischt werden.

Vorzugsweise enthält das Konzentrat ein Konservierungsmittel mit einem Gewichtsanteil von 0,1 bis 5%. Bevorzugt ist dieses Konservierungsmittel Kaliumsorbat oder Ascorbinsäure zur Verbesserung der Dauerhaltbarkeit des Konzentrats.

Auch ist es vorteilhaft, wenn das Konzentrat ein ionisches Tensid mit einem Gewichtsanteil von 0,1 bis 5% enthält. Hier werden vorzugsweise Natriumdodecylsulfat oder Natriumlaurylsulfat verwendet. Alternativ oder zusätzlich können dem Konzentrat in vorteilhafter Weise eine organische oder anorganische Säure mit einem Gewichtsanteil von 0,1 bis 5% zugesetzt werden. Diese können vorzugsweise aus der Gruppe Zitronensäure, Milchsäure, Ameisensäure, Oxalsäure, Phosphorsäure oder para-Toluolsulfonsäure ausgewählt werden. Diese Zusätze verbessern das Benetzungs- und Abwaschverhalten des Kühl- und Trennmittels oder Schmiermittels zusätzlich und verbessern die Reinigungseigenschaften des Mittels.

Auch kann das Konzentrat in einer vorteilhaften Mischung nicht-ionische Tenside mit einem Gewichtsanteil von 0,1 bis 5% enthalten. Bevorzugt werden hier nichtionische Tenside auf Basis von langkettigen Fettsäuren, insbesondere Palmöl, Leinöl oder Knochenfetten oder auch auf Basis von Terpenen, wie beispielsweise Limonen verwendet. Diese Substanzen verbessern die Schmier- und Trenneigenschaften des aufgetragenen Mittels.

Des Weiteren kann das Konzentrat einen Weichmacher mit einem Gewichtsanteil von 1 bis 10% enthalten, der ein Polyol, insbesondere Glycerin oder Sorbit ist. Diese beeinflussen die Filmbildung und Abwaschbarkeit des Kühl- und Trennmittels oder Schmiermittels positiv.

In vorteilhafter Weise kann auch ein Flussmittel mit einem Gewichtsanteil von 0,1 bis 1% dem Konzentrat beigemischt werden. Hierdurch kann ein zusätzlicher Oxidationsschutz für die Applikation erreicht werden. Vorzugsweise ist dieses Flussmittel ein Natriumborat oder ein Lithiumfluorid, Lithiumchlorid oder Lithiumcarbonat.

In einer weiterführenden Ausführung enthält das Konzentrat einen Katalysator mit einem Gewichtsanteil von 100 bis 500 ppm, der insbesondere ein Eisenoxid oder ein Eisenpyrophosphat oder Vanadium oder dessen Oxide oder Chrom oder dessen Oxide sein kann. Durch diesen Zusatz wird die Pyrolyse bei geringeren Temperaturen beschleunigt.

Auch kann in einer besonderen Ausführung ein Bakterizid und Funigizid mit einem Gewichtsanteil von vorzugsweise 0,01 ppm bis 1 ppm zugegeben werden. Besonders geeignet sind Silbersalze, Zinksalze oder Kupfersalze, insbesondere Silberacetat, Silbernitrat oder Silberchlorid als Bakterizid.

In einer besonderen Ausführung können feste Gleitmittel wie Molybdändisulfid oder Bornitrid mit einem Gewichtsanteil von 0,1 bis 1% zugegeben werden.

Es wird somit ein Konzentrat beziehungsweise ein Kühl- und Trennmittel oder Schmiermittel geschaffen, welches im Vergleich zu den bekannten Mitteln ein verbessertes Kühlverhalten bei gleichzeitig verbesserter Trennwirkung mit reproduzierbarem Wärmeübergangsverhalten beziehungsweise verbesserter Schmierwirkung aufweist. So können Fehler beim Gießvorgang vermieden werden und die Maßgenauigkeit der Gussteile auch über viele Zyklen beibehalten werden. Die notwendige Schnittkraft bei der Verwendung als Schmiermittel in spanabhebenden Prozessen wird verringert.

Die vorteilhaften Wirkungen dieses Kühl- und Trennmittels wurden in Versuchen nachgewiesen, die nachfolgend beschrieben werden.

In einem ersten Versuch wurden für ein erfindungsgemäßes Kühl- und Trennmittel die Konzentrationen bestimmt, bei denen ein pyrolytischer Zerfall keine Haftung von Rückständen am simulierten Gussteil zeigt. Als Konzentrat diente eine Lösung mit 50 Gew.% Gelatine mit 1.000 bis 7.000 Dalton Molekulargewicht und 16 bis 19% Stickstoffgehalt als Protein, 1 Gew.% Zitronensäure, 0,1ppm Silberacetat als Bakterizid, 0,1 Gew.% Kaliumsorbat als Konservierungsmittel und dem Rest Wasser.

Dabei wurde eine Stahlplatte aus dem Werkstoff 1.2343 zuerst mit einer Passivierungsschicht mit den Hauptkomponenten Manganphosphat und Molybdändisulfid beschichtet. Diese Stahlplatte wurde anschließend bei ca. 250 °C in eine Lösung mit einem Trockensubstanzgehalt von 0,25 %, was etwa einem Verdünnungsverhältnis des Konzentrats von 1:200 entspricht, für 10 Sekunden getaucht. Auf die beschichtete Stahlplatte wurde ein Aluminiumstück aus dem Werkstoff AlSi₉Cu₃ aufgebracht. Nach Abtrocknen des Films konnte eine Haftung des Aluminiumstückes festgestellt werden. Die mit dem Aluminiumstück versehene Stahlplatte wurde daraufhin für 1 min in einen auf 750 °C temperierten Ofen gelagert, um die Temperaturbelastung beim Gießvorgang zu simulieren. Nach Entnahme des Bleches konnte das Aluminiumstück sehr leicht bewegt werden. Es wurden Ascherückstände festgestellt. Somit konnte gezeigt werden, dass mit einem biologisch abbaubarem Trennmittel keine Klebeneigung der Trennmittelrückstände am simulierten Gussteil besteht.

In weiteren Versuchen an Druckgusswerkzeugen wurde die Konzentration auf reale Bedingungen weiter angepasst. Bei Trockensubstanzgehalten von 0,125%, was etwa einem Verdünnungsverhältnis des Konzentrats von 1:400 entspricht, konnte eine zufriedenstellende Entformung und kein signifikanter Aufbau des Kühl- und Trennmittels in den Randbereichen der Form beziehungsweise in den Kavitäten festgestellt werden. In Abhängigkeit von der Gießtemperatur war der vollständige pyrolytische Verfall nicht in jedem Falle einhundertprozentig gegeben.

Bei Trockensubstanzgehalten von 0,0625%, was einem Verdünnungsverhältnis des Konzentrats von 1:800 entspricht, wurden optimale Kühl- und Trennwirkungen an den Druckgusswerkzeugen erzielt. Im Vergleich zum Einsatz der aus dem Stand bekannten Kühl- und Trennmitteln wurde bei bis zu 50% reduzierten Mengenverhältnissen der Trockensubstanz eine zumindest gleichwertige Kühlwirkung erzielt. Die dabei beobachtete Trennwirkung war sehr gut. Die optische Qualität der Oberfläche wurde im Vergleich zu den bekannten Kühl- und Trennmitteln deutlich verbessert. Hauptursache für diese Eigenschaft ist die einheitliche Benetzung der Oberfläche, da das Kühl- und Trennmittel als vollständige Lösung und nicht lediglich als Emulsion vorliegt.

Das Kühl-/Trennmittel mit dem Trockensubstanzgehalt von 0,0625% wurde in nachfolgenden Versuchen mit einem Kühl- und Trennmittel nach dem Stand der Technik verglichen. Als Vergleichs-Kühl- und Trennmittel diente eine Emulsion aus Polysiloxanen und synthetischen Polymeren mit einem Trockensubstanzgehalt von 0,15%.

Eingesetzt wurden beide Produkte auf einer Stahlplatte des Werkstoffe 1.2343. Der Sprühdruck beim Benetzen der Platte mittels eines mit Druckzerstäubung arbeitenden Sprühkopfes betrug circa 1,5 bar.

Zuerst wurde das Abwaschverhalten der beiden Kühl- und Trennmittel untersucht. Dabei wurden beide Produkte auf eine auf 200 °C erwärmte Stahlplatte nach dem oben aufgeführten Verfahren aufgesprüht. Aufgetragen wurde jeweils eine Menge von 50 ml. Nach Abkühlung wurde der gebildete Film jeweils mit einem Tuch abgewischt, das mit dem entsprechenden Kühltrennmittel befeuchtet war. Der Grad der Reinigung wurde durch Betropfen mit Wasser und Beurteilung des Benetzungsverhaltens ermittelt. Dabei wurden die beiden mit den Kühl-und Trennmitteln behandelten Platten verglichen.

Bei der mit dem erfindungsgemäßen Kühl- und Trennmittel behandelten Platte zeigte sich eine in der Qualität gute Benetzung beinahe ohne Fehlstellen im Vergleich zu einer lediglich mäßigen Benetzung der mit dem bekannten Kühl- und Trennmittel behandelten Platte.

Gleichzeitig wurde auch ein etwa in gleichem Maße verbessertes Abwaschverhalten erzielt, welches somit direkt mit dem Benetzungsverhalten in Zusammenhang steht.

Bei Behandlung der Stahloberfläche mit dem bekannten Mittel wurde die Fläche nur mäßig benetzt, was auf das Vorhandensein von nicht abgewaschenen Belägen mit geringer Oberflächenspannung wie beispielsweise Wachse oder Silikone zurückzuführen ist. Bei Anwendung des erfindungsgemäßen Kühl- und Trennmittels kam es zu einer guten Benetzung der Oberfläche, was auf die vollständige Wasserlöslichkeit des erfindungsgemäßen Produktes zurückzuführen ist.

Des Weiteren wurde das Zersetzungsverhalten beider Kühl- und Trennmittel auf einer Stahlplatte des Werkstoffe 1.2343 überprüft, indem die Stahlplatten zunächst in einem 500 °C heißen Ofen circa 5 Minuten erhitzt wurden und jede Platte mit einem der beiden Produkte nach dem oben dargestellten Verfahren beaufschlagt wurde. Dieser Vorgang wurde drei Mal wiederholt. Dabei wurden je Vorgang 150 ml der Kühl- und Trennmittel verwendet.

Zur Ermittlung der verbliebenen Rückstände wurde die Stahlplatte nach der letzten Abkühlung mit einem weißen Tuch abgewischt. Bei der mit dem erfindungsgemäßen Mittel besprühten Platte zeigte sich im Vergleich zur mit dem bekannten Mittel besprühten Platte eine deutliche Verringerung der ermittelten Rückstände.

Durch die durchgeführten Versuche konnte gezeigt werden, dass durch die Verwendung des erfindungsgemäßen Kühl- und Trennmittels sowohl eine Verbesserung bei der Benetzung als auch bei der Abwaschbarkeit erzielt wird. Dies hat zur Folge, dass bessere Gussqualitäten durch ein verbessertes Zersetzungsverhalten und daraus folgende Verhinderung eines ungewünschten Schichtaufbaus erzielt werden können.

In einem weiteren Versuch wurde das Konzentrat für die Verwendung als Kühl- und Schmiermittel mit Wasser im Verhältnis 1:50 gemischt. Das Kühl- und Schmiermittel wurde zur Kühlung eines HSS Bohrers mit 7,5 mm Durchmesser verwendet. Mit diesem Bohrer wurde bei 850 U/min ein Loch in einen Warmarbeitsstahl 1.2343 gebohrt. Im Vergleich zu marktüblichen Schmiermitteln wurde dabei festgestellt, dass der Kraftaufwand, das heißt die Stromaufnahme des Bohrerantriebs sank. Durch die verbesserte Kühlwirkung konnte eine zuvor vorhandene starke Rauchentwicklung ebenso vollständig vermieden werden wie die bläuliche Verfärbung des Stahlteils und der anfallenden Späne. Die Spanbildung war lang und gleichmäßig. Aufbauschneiden konnten keine mehr festgestellt werden.

Somit wird durch das beschriebene Kühl- und Schmiermittel in Abhängigkeit der Temperatur ein scherstabiles System darstellt. Mit steigender Leistung konnte die Kühlleistung im Vergleich zu anderen Stoffen verbessert werden, da das druckbeständige Kühl- und Schmiermittel eine verbesserte Trennwirkung aufweist.

Es sollte deutlich sein, dass die Erfindung nicht auf die beschriebenen Ausführungsbeispiele beschränkt ist, sondern verschiedene Modifikationen für den Fachmann innerhalb der Schutzbereiche der Hauptansprüche möglich sind.

## Patentansprüche

1. Verwendung eines Kühl- und Trennmittels für wiederverwendbare Gussformen, insbesondere Stahlgussformen, wobei das Kühl- und Trennmittel aus einem Konzentrat mit einer in Wasser gelösten Wirksubstanz hergestellt ist,
**dadurch gekennzeichnet, dass**
das Konzentrat eine Gelatine mit einem Gewichtsanteil von 10% bis 50% beinhaltet, welche ein Molekulargewicht von 1.000 bis 7.000 Dalton und einen Stickstoffgehalt von 16 - 19% aufweist.

2. Verwendung nach Anspruch 1, wobei das Konzentrat in Wasser in einem Verhältnis von 1:100 bis 1:1200 verdünnt ist, insbesondere in einem Verhältnis von 1:500 bis 1:1000.

3. Verwendung eines Kühl- und Schmiermittels für die spanabhebende Bearbeitung, wobei das Kühl- und Schmiermittel aus einem Konzentrat mit einer in Wasser gelösten Wirksubstanz hergestellt ist,
**dadurch gekennzeichnet, dass**
das Konzentrat eine Gelatine mit einem Gewichtsanteil von 10% bis 50% beinhaltet, welche ein Molekulargewicht von 1.000 bis 7.000 Dalton und einen Stickstoffgehalt von 16 - 19% aufweist.

4. Verwendung nach Anspruch 3, wobei das Konzentrat in Wasser in einem Verhältnis von 1:20 bis 1:500 verdünnt ist.

5. Verwendung nach einem der vorhergehenden Ansprüche, wobei das Konzentrat ferner ein von dem Protein verschiedenes Hydrokolloid mit einem Gewichtsanteil von 0,1 bis 10% enthält oder ein von dem Protein verschiedenes Polymer mit einem Gewichtsanteil von 0,1 bis 10% enthält.

6. Verwendung nach Anspruch 5, wobei das Hydrokolloid aus einem oder mehreren der Stoffe Agar-Agar, Johannisbrotkernmehl, Pektin, Gummi Arabicum, Stärke oder Maismehl ausgewählt ist oder das Polymer Polyethylenglykol oder Polyvinylalkohol ist.

7. Verwendung nach einem der vorhergehenden Ansprüche, wobei das Konzentrat ein Konservierungsmittel mit einem Gewichtsanteil von 0,1 bis 5% enthält.

8. Verwendung nach Anspruch 7, wobei das Konservierungsmittel Kaliumsorbat oder Ascorbinsäure ist.

9. Verwendung nach einem der vorhergehenden Ansprüche, wobei das Konzentrat ein ionisches Tensid mit einem Gewichtsanteil von 0,1 bis 5% enthält.

10. Verwendung nach Anspruch 9, wobei das ionische Tensid Natriumdodecylsulfat oder Natriumlaurylsulfat ist.

11. Verwendung nach einem der vorhergehenden Ansprüche, wobei das Konzentrat eine organische oder anorganische Säure mit einem Gewichtsanteil von 0,1 bis 5% enthält.

12. Verwendung nach Anspruch 11, wobei die organische oder anorganische Säure aus der Gruppe Zitronensäure, Milchsäure, Ameisensäure, Oxalsäure, Phosphorsäure oder para-Toluolsulfonsäure ausgewählt ist.

13. Verwendung nach einem der vorhergehenden Ansprüche, wobei das Konzentrat nicht-ionische Tenside mit einem Gewichtsanteil von 0,1 bis 5% enthält.

14. Verwendung nach Anspruch 13, wobei das nicht-ionische Tensid auf Basis von langkettigen Fettsäuren oder Terpenen hergestellt ist.

15. Verwendung nach einem der vorhergehenden Ansprüche, wobei das Konzentrat einen Weichmacher mit einem Gewichtsanteil von 1 bis 10% enthält, wobei der Weichmacher ein Polyol, insbesondere Glycerin oder Sorbit ist.

16. Verwendung nach einem der vorhergehenden Ansprüche, wobei das Konzentrat ein Flussmittel mit einem Gewichtsanteil von 0,1 bis 1% enthält, wobei das Flussmittel ein Natriumborat oder ein Lithiumfluorid oder ein Lithiumchlorid oder ein Lithiumcarbonat ist.

17. Verwendung nach einem der vorhergehenden Ansprüche, wobei das Konzentrat einen Katalysator mit einem Gewichtsanteil von 100 bis 500 ppm enthält, wobei der Katalysator ein Eisenoxid oder ein Eisenpyrophosphat ist oder Vanadium oder dessen Oxide oder Chrom oder dessen Oxide ist.

18. Verwendung nach einem der vorhergehenden Ansprüche, wobei das Konzentrat ein Bakterizid und Fungizid mit einem Gewichtsanteil von 0,01 ppm bis 1 ppm enthält.

19. Verwendung nach Anspruch 18, wobei das Bakterizid und Fungizid ein Silbersalz, Zinksalz oder Kupfersalz ist.

20. Verwendung nach einem der vorhergehenden Ansprüche, wobei das Konzentrat feste Gleitmittel mit einem Gewichtsanteil von 0,1 bis 1% enthält.

21. Verwendung nach Anspruch 20, wobei die festen Gleitmittel Molybdändisulfid oder Bornitrid sind.

## Claims

1. Use of a cooling and release agent for reusable casting dies, in particular steel casting dies, wherein the cooling and release agent is made from a concentrate with an active substance dissolved in water,
**characterized in that**
the concentrate comprises a gelatin at a weight proportion of from 10% to 50%, which has a molecular weight of from 1,000 to 7,000 Dalton and a nitrogen content of from 16 to 19%.

2. Use according to claim 1, wherein the concentrate is diluted in water at a ratio of from 1:100 to 1:1200, in particular at a ratio of from 1:500 to 1:1000.

3. Use of a cooling and lubricating agent for machining purposes, wherein the cooling and lubricating agent is made from a concentrate with an active substance dissolved in water,
**characterized in that**
the concentrate comprises a gelatin at a weight proportion of from 10% to 50%, which has a molecular weight of from 1,000 to 7,000 Dalton and a nitrogen content of from 16 to 19%.

4. Use according to claim 3, wherein the concentrate is diluted in water at a ratio of from 1:20 to 1:500.

5. Use according to any one of the preceding claims, wherein the concentrate further comprises a hydrocolloid different from the protein at a weight proportion of from 0.1 to 10%, or a polymer different from the protein at a weight proportion of from 0.1 to 10%.

6. Use according to claim 5, wherein the hydrocolloid is selected from at least one of agar-agar, locust bean gum flour, pectin, gum arabic, starch and corn flour, or wherein the polymer is polyethylene glycol or polyvinyl alcohol.

7. Use according to any one of the preceding claims, wherein the concentrate comprises a preserving agent at a weight proportion of from 0.1 to 5%.

8. Use according to in claim 7, wherein the preserving agent is potassium sorbate or ascorbic acid.

9. Use according to any one of the preceding claims, wherein the concentrate comprises an ionic surfactant at a weight proportion of from 0.1 to 5%.

10. Use according to claim 9, wherein the ionic surfactant is sodium dodecyl sulphate or sodium lauryl sulphate.

11. Use according to any one of the preceding claims, wherein the concentrate comprises an organic or inorganic acid at a weight proportion of from 0.1 to 5%.

12. Use according to claim 11, wherein the organic or inorganic acid is selected from the group of citric acid, lactic acid, formic acid, oxalic acid, phosphoric acid or para-toluene sulphonic acid.

13. Use according to in any one of the preceding claims, wherein the concentrate comprises non-ionic surfactants at a weight proportion of from 0.1 to 5%.

14. Use according to claim 13, wherein the non-ionic surfactant is produced on the basis of long-chained fatty acids and terpenes.

15. Use according to any one of the preceding claims, wherein the concentrate comprises a softener at a weight proportion of from 1 to 10%, wherein the softener is a polyol, in particular glycerin or sorbitol.

16. Use according to any one of the preceding claims, wherein the concentrate comprises a fluxant at a weight proportion of from 0.1 to 1%, wherein the fluxant is a sodium borate or a lithium fluoride or a lithium chloride or a lithium carbonate.

17. Use according to any one of the preceding claims, wherein the concentrate comprises a catalyst at a weight proportion of from 100 to 500 ppm, wherein the catalyst is an iron oxide or a ferric pyrophosphate, or vanadium or its oxides, or chrome or its oxides.

18. Use according to any one of the preceding claims, wherein the concentrate comprises a bactericide and fungicide at a weight proportion of from 0.01 to 1 ppm.

19. Use according to claim 18, wherein the bactericide and fungicide is a silver salt, a zinc salt or a copper salt.

20. Use according to any one of the preceding claims, wherein the concentrate comprises solid lubricants at a weight proportion of from 0.1 to 1%.

21. Use according to claim 20, wherein the solid lubricants are molybdenum disulphide and boron nitride.

## Revendications

1. Utilisation d'un agent de refroidissement et de séparation pour des moules de coulée réutilisables, en particulier des moules de coulée d'acier, dans laquelle l'agent de refroidissement et de séparation est fabriqué à partir d'un concentré avec une substance active dissoute dans de l'eau,
**caractérisée en ce que**
le concentré contient une gélatine avec une proportion en poids de 10 % à 50 %, laquelle présente un poids moléculaire de 1 000 à 7 000 daltons et une teneur en azote de 16 - 19 %.

2. Utilisation selon la revendication 1, dans laquelle le concentré est dilué dans de l'eau selon un rapport de 1:100 à 1:1200, en particulier selon un rapport de 1:500 à 1:1000.

3. Utilisation d'un agent de refroidissement et de lubrification pour l'usinage par enlèvement de copeaux, dans laquelle l'agent de refroidissement et de lubrification est fabriqué à partir d'un concentré avec une substance active dissoute dans de l'eau,
**caractérisée en ce que**
le concentré contient une gélatine avec une proportion en poids de 10 % à 50 %, laquelle présente un poids moléculaire de 1 000 à 7 000 daltons et une teneur en azote de 16 - 19 %.

4. Utilisation selon la revendication 3, dans laquelle le concentré est dilué dans de l'eau selon un rapport de 1:20 à 1:500.

5. Utilisation selon l'une quelconque des revendications précédentes, dans laquelle le concentré contient en outre un hydrocolloïde différent de la protéine avec une proportion en poids de 0,1 à 10 % ou contient un polymère différent de la protéine avec une proportion en poids de 0,1 à 10 %.

6. Utilisation selon la revendication 5, dans laquelle l'hydrocolloïde est choisi parmi une ou plusieurs des matières Agar-Agar, gomme de caroube, pectine, gomme arabique, amidon ou farine de maïs ou le polymère est du polyéthylène glycol ou de l'alcool polyvinylique.

7. Utilisation selon l'une quelconque des revendications précédentes, dans laquelle le concentré contient un agent de conservation avec une proportion en poids de 0,1 à 5 %.

8. Utilisation selon la revendication 7, dans laquelle l'agent de conservation est du sorbate de potassium ou de l'acide ascorbique.

9. Utilisation selon l'une quelconque des revendications précédentes, dans laquelle le concentré contient un agent tensioactif ionique avec une proportion en poids de 0,1 à 5 %.

10. Utilisation selon la revendication 9, dans laquelle l'agent tensioactif ionique est du dodécylsulfate de sodium ou du laurylsulfate de sodium.

11. Utilisation selon l'une quelconque des revendications précédentes, dans laquelle le concentré contient un acide organique ou inorganique avec une proportion en poids de 0,1 à 5 %.

12. Utilisation selon la revendication 11, dans laquelle l'acide organique ou inorganique est choisi parmi le groupe acide citrique, acide lactique, acide formique, acide oxalique, acide phosphorique ou acide paratoluènesulfonique.

13. Utilisation selon l'une quelconque des revendications précédentes, dans laquelle le concentré contient des agents tensioactifs non ioniques avec une proportion en poids de 0,1 à 5 %.

14. Utilisation selon la revendication 13, dans laquelle l'agent tensioactif non ionique est fabriqué à base d'acides gras à longue chaîne ou de terpènes.

15. Utilisation selon l'une quelconque des revendications précédentes, dans laquelle le concentré contient un plastifiant avec une proportion en poids de 1 à 10 %, dans laquelle le plastifiant est un polyol, en particulier de la glycérine ou du sorbitol.

16. Utilisation selon l'une quelconque des revendications précédentes, dans laquelle le concentré contient un fondant avec une proportion en poids de 0,1 à 1 %, dans laquelle le fondant est un borate de potassium ou un fluorure de lithium ou un chlorure de lithium ou un carbonate de lithium.

17. Utilisation selon l'une quelconque des revendications précédentes, dans laquelle le concentré contient un catalyseur avec une proportion en poids de 100 à 500 ppm, dans laquelle le catalyseur est un oxyde de fer ou un pyrophosphate de fer ou du vanadium ou ses oxydes ou du chrome ou ses oxydes.

18. Utilisation selon l'une quelconque des revendications précédentes, dans laquelle le concentré contient un bactéricide ou un fongicide avec une proportion en poids de 0,01 ppm à 1 ppm.

19. Utilisation selon la revendication 18, dans laquelle le bactéricide ou le fongicide est un sel d'argent, un sel de zinc ou un sel de cuivre.

20. Utilisation selon l'une quelconque des revendications précédentes, dans laquelle le concentré contient des lubrifiants solides avec une proportion en poids de 0,1 à 1 %.

21. Utilisation selon la revendication 20, dans laquelle les lubrifiants solides sont du sulfure de molybdène ou du nitrure de bore.
